# EUROPÄISCHE PATENTSCHRIFT

(11) **EP 3 396 187 B1**
(45) Veröffentlichungstag und Bekanntmachung des Hinweises auf die Patenterteilung: **01.04.2020**
(21) Anmeldenummer: 18169073.6
(22) Anmeldetag: 24.04.2018
(51) Int. Cl.: F16C 33/12, F16C 33/14, F16C 17/02, F16C 33/04, F16C 33/10

(54) **VERFAHREN ZUR HERSTELLUNG EINER GLEITLAGERBÜCHSE**
METHOD FOR PRODUCING A SLIDING BEARING SOCKET
PROCÉDÉ DE FABRICATION D'UN COUSSINET DE PALIER LISSE

(30) Priorität: 26.04.2017 AT 503412017
(43) Veröffentlichungstag der Anmeldung: 31.10.2018
(73) Patentinhaber: Miba Gleitlager Austria GmbH, 4663 Laakirchen (AT)
(72) Erfinder: HÖLZL, Johannes Sebastian, 4880 Berg im Attergau (AT)
(74) Vertreter: Burger, Hannes

(56) Entgegenhaltungen:
- EP-A2- 0 306 065
- EP-A2- 1 184 098
- WO-A1-2016/058018
- CN-U- 203 395 019
- DE-A1-102005 047 625
- DE-A1-102008 049 747
- DE-T5-112011 104 685
- US-A- 2 377 681
- US-A- 5 274 921
- US-A1- 2012 051 915

## Beschreibung

Die Erfindung betrifft ein Verfahren zur Herstellung einer Gleitlagerbüchse nach dem eine ebene Stützmetallschicht bereitgestellt wird, auf dieser Stützmetallschicht zur Herstellung eines ebenen Verbundwerkstoffes eine Gleitschicht angeordnet wird, und danach der ebene Verbundwerkstoff in die Form der Gleitlagerbüchse eingerollt wird, wobei der ebene Verbundwerkstoff derart eingerollt wird, dass in der Gleitlagerbüchse (4) die Stützmetallschicht (8) radial unterhalb der Gleitschicht (9) angeordnet wird.

Weiter betrifft die Erfindung eine gerollte Gleitlagerbüchse aus einem Verbundwerkstoff umfassend eine Stützmetallschicht und eine Gleitschicht.

Die Erfindung betrifft auch eine Achse, insbesondere einen Planetenradzapfen für ein Windkraftanlagengetriebe, mit einer Gleitlagerbüchse.

Zudem betrifft die Erfindung ein Windkraftanlagengetriebe mit zumindest einem Zahnrad, das auf einer Achse gelagert ist, wobei zwischen dem Zahnrad und der Achse eine Lagerstelle mit einer Gleitlagerbüchse angeordnet ist.

Gleitlagerbüchsen sind im Allgemeinen derart gestaltet, dass das Lagermaterial auf der Büchseninnenseite angebracht ist. Damit ist festgelegt, dass die Büchse nie auf der Welle aufgeschrumpft wird, sondern in der Lageraufnahme eingepresst wird.

Auf dem Windenergiesektor ist aber aus der EP 2 383 480 Alauch bekannt, dass ein eine Gleitlagerbüchse drehfest mit einer Achse verbunden ist. In dieser Druckschrift wird ein Planetengetriebe für eine Windkraftanlage mit zumindest einem Sonnenrad, einem Hohlrad und einem Planetenträger, in dem mehrere Planetenräder gelagert sind, beschrieben. Es sind mehrere Radialgleitlagern zur Lagerung der Planetenräder vorhanden, die jeweils eine Hülse aus einem Gleitlagerwerkstoff umfassen, die als Innenring auf der Planetenradachse befestigt ist, wobei ein zugehöriger Lageraußenring durch die Bohrung des Planetenrades gebildet ist. Als Gleitlagerwerkstoffe werden Kupfer-Zink-Legierungen, Kupfer-Zinn-Legierungen und Aluminium-Zinn-Legierungen beschrieben. Es wird weiter beschrieben, dass sich eine kostengünstige Gleitlagerrealisierung ergibt, wenn der der Gleitlagerwerkstoff jeweils auf einen Stahlstützkörper walzplattiert ist. Diese Druckschrift enthält jedoch keinen Hinweis darauf, in welcher radialen Abfolge die einzelnen Schichten angeordnet sind. Insbesondere ergibt sich aus den Zeichnungen für den Fachmann auch kein mehrschichtiger Aufbau der Gleitlagerbüchsen, sondern nur ein Einschichtmaterial. Es ist daher für den Fachmann klar, dass in Ansehung des voran skizzierten allgemeinen Fachwissens die mehrschichtige Ausführungsvariante der Gleitlagerbüchse der Gleitlagerwerkstoff die radial innere Schicht bildet.

Aus der AT 513 743 A4 ist ein Windkraftanlagengetriebe mit zumindest einem Zahnrad, das auf einer Achse gelagert ist, wobei zwischen dem Zahnrad und der Achse eine Lagerstelle mit einem Gleitlager angeordnet ist, bekannt. Das Gleitlager ist insbesondere als Gleitlagerbüchse ausgeführt, und kann mit der Achse oder dem Zahnrad drehfest verbunden sein. Weiter ist die Gleitlagerbüchse als Mehrschichtgleitlager ausgeführt.

Die WO 2016/058018 A1 beschreibt ein Planetengetriebe für eine Windkraftanlage, umfassend einen Planetenträger mit einem ersten Lageraufnahmeabschnitt und einem zweiten Lageraufnahmeabschnitt, in welchen Lageraufnahmeabschnitten jeweils mehrere Lagersitze ausgebildet sind, mehrere Planetenradachsen, mehrere Radialgleitlager zur Lagerung der Planetenradachsen im Planetenträger, wobei jede der Planetenradachsen jeweils in einem der Lagersitze des ersten Lageraufnahmeabschnittes und in einem der Lagersitze des zweiten Lageraufnahmeabschnittes gelagert sind. Die Radialgleitlager sind bevorzugt als Mehrschichtgleitlager ausgebildet. Ein Mehrschichtgleitlager umfasst zumindest eine Stützschicht und zumindest eine Gleitschicht, die auf der Stützschicht aufgebracht ist. Die Gleitschicht bildet eine Lauffläche für den Planetenträger oder die Planetenradachse. Die Radialgleitlager können gerollte Buchsen sein.

Aus der EP 1 184 098 A2 ist Biegeverfahren mit den folgenden Schritten bekannt: Bereitstellen eines riemenförmigen dicken Stahlmaterials, welches entweder einen L-förmigen Querschnitt oder einen U-förmigen Querschnitt aufweist; und Formen des Materials zu einem Zylinder unter Verwendung einer zentralen Walze, die zu einer Drehung anzutreiben ist, und die in einer vorbestimmten Position angeordnet und fixiert ist, und eines Paares von Biegewalzen, die zu einer Drehung anzutreiben sind, und die gegenüber der zentralen Walze auf einer Seite der zentralen Walze angeordnet sind, wobei die Biegewalzen in Richtung zu der zentralen Walze und von dieser weg bewegbar sind, wobei das riemenförmige dicke Stahlmaterial dadurch gebogen wird, dass es zwischen der zentralen Walze und dem Paar von Biegewalzen hindurchgeführt wird. Eine Presswalze, die gegenüber der zentralen Walze auf einer Seite der zentralen Walze und zwischen den Biegewalzen angeordnet ist, presst das riemenförmige dicke Stahlmaterial so, dass das riemenförmige dicke Stahlmaterial während des Biegens nicht verformt wird. Das gebogene Werkstück kann eine lageraufnehmende Einheit für eine Baumaschine sein. In einer bevorzugten Ausführungsform wird das gebogene Werkstück dadurch gebildet, dass eine riemenförmige dicke Stahlplatte, die einen L-förmigen Querschnitt aufweist, gebogen wird, und dass die Stahlplatte an ihren Enden verschweißt wird, sodass ein Zylinder gebildet wird.

Aus der EP 0 306 065 A2 ist eine gerollte Buchse für Gleitlager bekannt, hergestellt aus einem Bandabschnitt, vorzugsweise aus Mehrschicht-Werkstoff, mit über die ganze Lagerbreite gehender Stoßfuge und ohne Bearbeitungszugabe in der Lagerbohrung, wobei die Stoßfuge ganz oder teilweise durch Ladungsträgerstrahlschweissen verschlossen ist.

Die CN 203 395 019 U offenbart ein Lager, das in einem Schiffsmotor angebracht ist. Das Lager umfasst einen Lagerkörper und eine in dem Lagerkörper angeordnete Ölnut, wobei die Ölnut mit einer Ölbohrung versehen ist. Auf die innere Oberfläche des Lagerkörpers wird eine Silbermetallschicht gegossen. Der Lagerkörper kann mit einer axialen Ölnut oder einer radialen Ölnut versehen sein; der Abschnitt der axialen Ölnut ist kreisbogenförmig. Ein Ölloch ist in der Bodenfläche der axialen Ölnut ausgebildet. Die Ölnut ist mit der Ölbohrung versehen, so dass Schmieröl tropfenweise in die Ölnut gegeben werden kann, um eine gute Schmierung sicherzustellen. Die Silbermetallschicht ist auf die Innenfläche des Lagerkörpers gegossen, so dass die Lebensdauer des Lagers verlängert werden kann und das Lager abriebfest ist und eine hohe Stabilität aufweist.

Die DE 11 2011 104 685 T5 beschreibt ein Gleitlager und eine mit diesem versehene Baumaschine, wobei das Gleitlager imstande ist, die Gleitleistung über einen langen Zeitraum hinweg aufrechtzuerhalten und eine entsprechende Festigkeit zeigt. Ein Gleitlager beinhaltet zumindest eine Buchse und ein Wellenteil, wobei das Wellenteil mit einem Schmierfett-Zuführungsweg versehen ist, um Schmierfett von außen zu den Gleitflächen des Wellenteils und der Buchse zuzuführen, wobei die Buchse aus einem porösen gesinterten Metall ausgebildet ist und ein Zersetzungskatalysator an die Gleitfläche der Buchse angehaftet ist.

Aus der DE 10 2005 047 625 A1 ist ein Radialgleitlager bekannt, mit einem stillstehenden inneren Lagerelement, das aus einem harten, verschleißfesten Werkstoff gefertigt ist und eine radial äußere Wirkfläche aufweist, mit einem um eine Drehachse umlaufenden äußeren Laufring, der aus einem harten, verschleißfesten Werkstoff hergestellt ist und eine zwischen seinen axialen Stirnseiten festgelegte radial innere Lauffläche aufweist, die die Wirkfläche des inneren Lagerelementes umgibt und mit dieser in Wirkverbindung steht, und mit einer Axialsicherungseinrichtung zur axialen Sicherung des Laufringes an dem inneren Lagerelement, wobei die Axialsicherungseinrichtung in Axialrichtung zwischen den axialen Stirnseiten des Laufringes angeordnet und unmittelbar zwischen der Lauffläche und der Wirkfläche wirksam ist, wobei das innere Lagerelement und/oder der Laufring zwei oder mehrere Teile aufweist, die in Axialrichtung hintereinander angeordnet sind.

Aus der US 2012/051915 A1 ist ein Planetengetriebe bekannt. Das Planetengetriebe umfasst: ein Zahnradelement mit einem Durchgangsloch; ein Zwischengehäuse, das in das Durchgangsloch eingesetzt ist und ein Einsatzloch aufweist, in dem ein Planetenstift angeordnet ist; und eine Vielzahl von Gleitlagerelementen, die mit dem Einsatzloch des Zwischengehäuses verbunden sind. Die mehreren Gleitlagerelemente bilden ein Gleitlager, das den Planetenstift und das Planetenrad drehbar miteinander verbindet.

Die US 5,274,921 A beschreibt eine Gleitlagerbuchse mit einer äußeren Gleitfläche. Die Buchse wird durch ein Stanzformverfahren ohne maschinelle Bearbeitung hergestellt. Eine ballige Form ist an der äußeren Oberfläche vorgesehen, so dass der Außendurchmesser der Buchse an ihren gegenüberliegenden Längsenden kleiner ist und progressiv zu einer zentralen Zone der Buchse hin zunimmt. Vorzugsweise umfasst der zylindrische Buchsenrohling ein Trägermetall als innere Schicht und eine äußere Schicht aus einer Lagerlegierung, die auf einer Außenseite des Trägermetalls angeordnet ist. Das innere Stützmetall und die äußere Lagerlegierungsschicht sind miteinander durch eine Zwischenbindungsmetallschicht durch Walzen verbunden. Typischerweise werden ein Stahlblech und ein Lagerlegierungsblech zusammen mit einem dazwischenliegenden Verbindungsmetallblech übereinandergelegt, und die übereinandergelegten Bleche werden zu einer integralen Struktur gewalzt. Dann wird das erhaltene Laminat in eine vorbestimmte Größe geschnitten und zu einer zylindrischen Form gebogen oder eingerollt.

Aus der US 2,377,681 A ist ein Verfahren zur Herstellung einer Buchse bekannt, die innen und außen mit einem Lagermetall beschichtet ist. Dazu werden zwei Rohlinge hergestellt, wobei ein Rohling die Lagermetallschicht außen und der andere innen aufweist. Die beiden Rohlinge werden anschließend miteinander verbunden. Die Rohlinge können aus einem ebenen Material durch Biegen und anschließendes Verschweißen der aneinander anliegenden Enden hergestellt werden.

Die DE 10 2008 049 747 A1 beschreibt ein schwingungsdämpfendes Gleitlager-Verbundmaterial, umfassend eine ein Gleitmaterial enthaltende Gleitschicht, eine formstabile Trägerschicht und eine elastische Schicht, erhalten durch Bereitstellen der Gleitschicht, der formstabilen Trägerschicht und der elastischen Schicht jeweils in Form von flächigem Material, insbesondere bahnförmigem Endlosmaterial, flächiges Verbinden der Gleitschicht mit der formstabilen Trägerschicht und flächiges Verbinden der elastischen Schicht mit der formstabilen Trägerschicht auf der von der Gleitschicht abgewandten Seite der formstabilen Trägerschicht oder Bereitstellen der Gleitschicht, der formstabilen Trägerschicht und der elastischen Schicht jeweils in Form von flächigem Material, insbesondere bahnförmigem Endlosmaterial, flächiges Verbinden der Gleitschicht mit der elastischen Schicht und flächiges Verbinden der elastischen Schicht mit der formstabilen Trägerschicht auf der von der Gleitschicht abgewandten Seite der elastischen Schicht. Aus diesem Vormaterial kann eine gerollte Gleitlagerbuchse hergestellt werden, wobei die Gleitschicht auf der Außenfläche der Buchse angeordnet sein kann.

Der vorliegenden Erfindung liegt die Aufgabe zugrunde, Kriecherscheinungen bei einer, auf einer Achse drehfest angeordneten Gleitlagerbüchse zur reduzieren bzw. zu vermeiden, insbesondere bei deren Einsatz in einem Windkraftanlagengetriebe.

Die Aufgabe der Erfindung wird mit der eingangs genannten Gleitlagerbüchse gelöst, bei der die die beiden aneinanderstoßenden Stirnflächen der nach dem Einrollen offenen Enden mit einer in der Axialrichtung verlaufenden Schweißnaht verbunden sind, eine in der Axialrichtung verlaufende Ölnut in einem Abstand zur Schweißnaht angeordnet ist, wobei der Abstand zur Schweißnaht zwischen 0,5 % und 10 % des äußeren Umfanges der Lauffläche der Gleitschicht - in der Axialrichtung betrachtet - beträgt, wobei in die Ölnut eine Schmiermittelzuführungsleitung mündet, wozu in der Stützmetallschicht und gegebenenfalls in der Gleitschicht eine entsprechende Bohrung ausgebildet ist.

Weiter wird die Aufgabe der Erfindung mit der eingangs genannten Achse gelöst, bei der die Gleitlagerbüchse erfindungsgemäß ausgebildet ist.

Die Aufgabe der Erfindung wird auch mit dem eingangs genannten Windkraftanlagengetriebe gelöst, bei dem die Achse erfindungsgemäß ausgebildet ist.

Zudem wird die Aufgabe der Erfindung mit dem eingangs genannten Verfahren gelöst, nach dem zur Verbindung der nach dem Einrollen offenen Enden die beiden aneinanderstoßenden Stirnflächen in der Axialrichtung unter Ausbildung einer in der Axialrichtung verlaufenden Schweißnaht miteinander verschweißt werden, dass weiter eine in der Axialrichtung verlaufende Ölnut in einem Abstand zur Schweißnaht ausgebildet wird, wobei der Abstand zwischen 0,5 % und 10 % des äußeren Umfanges der Lauffläche der Gleitschicht - in der Axialrichtung betrachtet - beträgt, wobei in die Ölnut eine Schmiermittelzuführungsleitung mündet, wozu in der Stützmetallschicht und gegebenenfalls in der Gleitschicht eine entsprechende Bohrung ausgebildet wird.

Von Vorteil ist dabei, dass durch das inverse Einrollen des ebenen Verbundwerkstoffes zur Gleitlagerbüchse auf der Achse relativ kostengünstig die Werkstoffkombination Stahl - harte Rückenmetallschicht, insbesondere Stahl, erhalten wird. Es können damit das Kriechen bzw. Relaxationserscheinungen im Bereich der drehfesten Verbindung der Gleitlagerbüchse mit der Achse einfacher verhindert bzw. reduziert werden. Zudem wird damit der Vorteil erreicht, dass das Einrollen des ebenen Verbundwerkstoffes über den härtesten Werkstoff des Verbundwerkstoffes erfolgt, wodurch Nachbearbeitungen der Gleitlagerbüchse reduziert werden können. Es können damit auch Reparaturarbeiten an der Gleitlagerbüchse in dem Windkraftanlagengetriebe einfacher durchgeführt werden, da die Achse des Getriebes einfacher zugänglich ist (im Vergleich zum Ausbau der Zahnräder des Getriebes). Dadurch ist es möglich, eventuell auftretendes Kriechen in der oder den weicheren Schicht(en) der Gleitlagerbüchse einfacher zu korrigieren bzw. zu beheben.

Die Gleitlagerbüchse weist in einer Axialrichtung eine Schweißnaht auf. Durch das stoffschlüssige Verbinden der beiden offenen Enden des eingerollten Verbundwerkstoffes kann die Formbeständigkeit der Gleitlagerbüchse verbessert werden. Im Vergleich zu verklinkten Ausführungen kann mit der stoffschlüssigen Verbindung eine homogenere Gleitfläche der Gleitlagerbüchse zur Verfügung gestellt werden.

Es ist weiter vorgesehen, dass die Gleitlagerbüchse neben der Schweißnaht eine in der Axialrichtung verlaufende Ölnut aufweist. Obwohl es an sich naheliegend wäre, die Ölnut zumindest teilweise in der Schweißnaht auszubilden, da damit durch das Schweißen bedingte Materialveränderungen an der Oberfläche der Gleitschicht entfernt und die Nachbearbeitung der Schweißnaht an sich in einem Arbeitsgang erledigt werden können, bietet die Anordnung der Ölnut neben der Schweißnaht den Vorteil, dass zur Herstellung der Schweißnaht die gesamte Gleitschicht und gegebenenfalls ein Teil der Stützmetallschicht zur Ausbildung einer Nut in der geschweißt wird, einfacher entfernt werden kann. Die Ölnut selbst kann dabei als "geschlossene Nut" ausgebildet sein, d.h. dass sie sich nicht über die gesamte Breite in Axialrichtung der Gleitlagerbüchse, also nicht bis in die seitlichen Stirnflächen, erstreckt. Es kann damit ein Ölverlust durch seitlichen Austritt besser vermieden werden.

Aus voranstehend genannten Gründen ist die Gleitlagerbüchse drehfest mit der Achse verbunden, insbesondere auf diese aufgeschrumpft.

Es kann weiter vorgesehen sein, dass in der Achse eine Schmiermittelzuführungsleitung ausgebildet ist, und dass in der Stützmetallschicht der Gleitlagerbüchse eine Bohrung ausgebildet ist, die in eine in der Axialrichtung verlaufende Ölnut in der Gleitschicht mündet. Durch die Schmiermittelzuführung über die Achse kann das Schmiermittelversorgungssystem für die Lagerstellen vereinfacht werden, wodurch das Windkraftanlagengetrieben kompakter aufgebaut werden kann.

Zum besseren Verständnis der Erfindung wird diese anhand der nachfolgenden Figuren näher erläutert.

Es zeigen jeweils in stark vereinfachter, schematischer Darstellung:
- Fig. 1: einen Querschnitt durch einen Ausschnitt aus einem Windkraftanlagengetriebe;
- Fig. 2: eine Achse in Schrägansicht;
- Fig. 3: einen Schnitt durch eine Gleitlagerbüchse.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

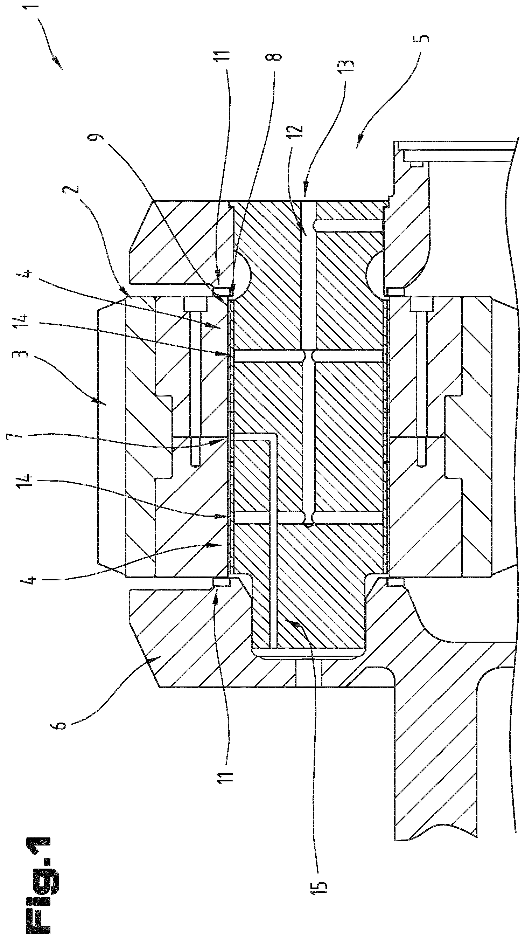

Fig. 1 zeigt einen Querschnitt durch einen Ausschnitt aus einem Windkraftanlagengetriebe 1. Das Windkraftanlagengetriebe 1 ist insbesondere in Form eines (einfachen) Planetengetriebes ausgebildet.

Bekanntlich umfassen Windkraftanlagen einen Turm an dessen oberen Ende eine Gondel angeordnet ist, in der der Rotor mit den Rotorblättern gelagert ist. Dieser Rotor ist über ein Getriebe mit einem Generator, der sich ebenfalls in der Gondel befindet, wirkungsverbunden, wobei über das Getriebe die niedrige Drehzahl des Rotors in eine höhere Drehzahl des Generatorrotors übersetzt wird. Da derartige Ausführungen von Windkraftanlagen zum Stand der Technik gehören, sei an dieser Stelle an die einschlägige Literatur hierzu verwiesen.

Das Windkraftanlagengetriebe 1 weist zumindest ein Zahnrad 2 auf. Dieses Zahnrad 2 ist in dem Windkraftanlagengetriebe 1 in kämmenden Eingriff zwischen einem zweiten und einem dritten Zahnrad (beide nicht dargestellt) angeordnet. Dazu weist das zumindest ein Zahnrad 2 eine Außenstirnverzahnung 3 auf.

In der Ausführungsform des Windkraftanlagengetriebes 1 als Planetengetriebe, insbesondere als Hauptgetriebe einer Windraftanlage, ist das zweite Zahnrad als Sonnenrad mit einer Stirnverzahnung ausgeführt, das mit einer Welle, die zum Generatorrotor führt, drehfest verbunden ist. Das Sonnenrad ist üblicherweise von mehreren Zahnrädern 2, den Planetenrädern, beispielsweise zwei, vorzugsweise drei oder vier, umgeben.

Das dritte Zahnrad ist als Hohlrad ausgeführt, dass das zumindest eine Zahnrad 2 bzw. die Zahnräder 2 in radialer Richtung umgibt und das an einer inneren Ober-fläche ebenfalls zumindest teilweise eine Verzahnung aufweist, die in kämmenden Eingriff mit der Außenstirnverzahnung 3 des Zahnrades 2 bzw. der Zahnräder 2 steht. Das Hohlrad ist drehfest mit einer Rotorwelle des Rotors der Windkraftanlage oder drehfest mit dem Gehäuse des Windkraftanlagengetriebes 1 verbunden.

Die Verzahnungen der Zahnräder in dem Windkraftanlagengetriebe 1 können als Geradverzahnung oder Schrägverzahnung ausgeführt sein.

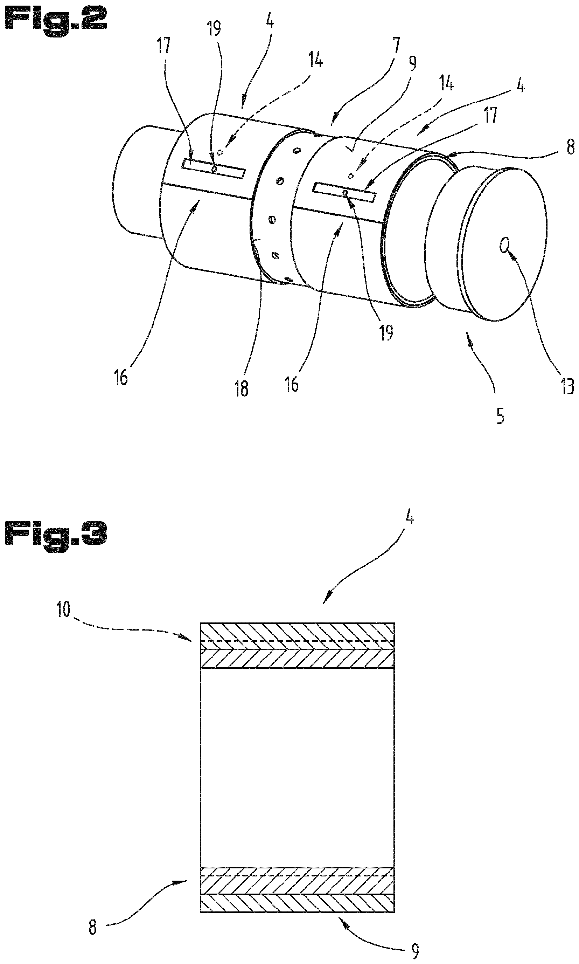

Das zumindest eine Zahnrad 2 (es wird im Folgenden nur mehr ein Zahnrad 2 beschrieben, wobei diese Ausführungen auch auf alle bzw. mehrere Zahnräder 2 übertragbar sind) ist über mehrere Gleitlagerbüchsen 4 auf einer Achse 5, also beispielsweise einem Planetenbolzen (der so genannten Planetenachse) gelagert. Diese Achse 5, die besser in Fig. 2 ersichtlich ist, kann in Bohrungen eines Zahnradträgers 6 gehalten sein.

Es sei darauf hingewiesen, dass nicht nur einstufige Ausführungen von derartigen Windkraftanlagengetrieben 1 im Rahmen der Erfindung möglich sind, sondern auch mehrstufige, beispielsweise zwei- oder dreistufige, wozu in zumindest einem Zahnrad 2, insbesondere einem Planeten, weitere Stirnradstufen integriert sein können. Zudem sind auch Parallelgetriebe im Rahmen der Erfindung darstellbar. die in diesem Umfang zu gegenständlicher Beschreibung gehört. Demgemäß kann das Windkraftanlagengetriebe 1 ein einfaches Planetengetriebe und ein paralleles zwei- oder mehrstufiges Planetengetriebe oder generell mehrere Planetengetriebe aufweisen.

Des Weiteren sei angemerkt, dass, obwohl bevorzugt, die Erfindung nicht nur in Planetengetrieben von Windkraftanlagen Anwendung findet, sondern generell in Getrieben für Windkraftanlagen verwendet werden kann, insbesondere zur Übersetzung der langsamen Drehzahl des Rotors einer Windkraftanlage in eine höhere Drehzahl. Auch andere Anwendungen der im Folgenden noch näher beschriebenen Gleitlagerbüchse 4 sind im Rahmen der Erfindung möglich.

Die Gleitlagerbüchsen 4 sind in axialer Richtung unter Ausbildung eines Zwischenraums 7 voneinander beabstandet angeordnet.

Die Gleitlagerbüchsen 4 sind drehfest mit der Achse 5 verbunden. Zur drehfesten Verbindung werden die Gleitlagerbüchsen 4 insbesondere auf die Achse 5 aufgeschrumpft (Presssitz). Es sind jedoch auch andere Methoden zur Herstellung der drehfesten Verbindung möglich. Beispielsweise können die Gleitlagerbüchsen 4 mit der Achse 5 verschweißt oder über Stifte verbunden sein. Die Gleitlagerbüchsen 4 können also formschlüssig und/oder kraftschlüssig mit der Achse 5 verbunden sein.

Die Gleitlagerbüchsen 4 sind als Mehrschichtgleitlager ausgebildet, wie dies insbesondere auch aus Fig. 3 zu ersehen ist.

Die Gleitlagerbüchsen 4 bestehen aus einer Stützmetallschicht 8 und einer Gleitschicht 9, die auf der Stützschicht 8 aufgebracht ist. Die Gleitschicht 9 bildet dabei eine Lauffläche für das Zahnrad 2 bzw. das zu lagernde Bauteil. Anders als bei herkömmlichen Gleitlagerbüchsen befindet sich die Stützmetallschicht 8 in radialer Richtung unterhalb der Gleitschicht 9, sodass sie in direktem Kontakt mit der Oberfläche der Achse 5 steht, an der sie anliegt bzw. mit der sie drehfest verbunden ist. Die Gleitschicht 9 ist demzufolge die radial äußerste Schicht.

Neben dieser zweischichtigen Ausführung der Gleitlagerbüchsen 4 besteht auch die Möglichkeit, dass Zwischenschichten zwischen der Gleitschicht 9 und der Stützmetallschicht 8 angeordnet sind, beispielsweise eine Lagermetallschicht 10, wie dies strichliert in Fig. 3 angedeutet ist. Weiter kann/können zwischen der Stützmetallschicht 8 und der Gleitschicht 9 und/oder zwischen der Lagermetallschicht 10 und der Gleitschicht 9 und/oder zwischen der Stützmetallschicht 8 und der Lagermetallschicht 10 zumindest eine Bindeschicht und/oder zumindest eine Diffusionssperrschicht angeordnet sein. Es besteht weiter die Möglichkeit, dass auf der Gleitschicht 9 eine Verschleißschicht oder eine Einlaufschicht angeordnet ist, die in diesem Fall die radial äußerste Schicht bildet.

Die jeweiligen Schichten können direkt miteinander verbunden sein, sodass also beispielsweise die Stützmetallschicht 8 direkt mit der Gleitschicht 9 oder der Lagermetallsicht 10 oder einer Bindeschicht oder einer Diffusionssperrschicht verbunden ist. Entsprechendes gilt bei einer anderen Schichtabfolge im Rahmen der voranstehend genannten Schichten der Gleitlagerbüchsen 4.

Die Stützmetallschicht 2 besteht insbesondere aus einem Stahlrücken. Sie kann aber auch aus einem anderen Material bestehen, das den Gleitlagerbüchsen 4 die erforderliche Formstabilität gibt.

Die gegebenenfalls vorhandene Lagermetallschicht 10 kann beispielsweise aus einer (bleifreien) Kupfer- oder Aluminiumlegierung oder Zinnlegierung bestehen. Beispiele hierfür sind AlSn6CuNi, AlSn20Cu, AlSi4Cd, AlCd3CuNi, AlSi11Cu, AlSn6Cu, AlSn40, AlSn25CuMn, AlSi11CuMgNi, CuSn10, CuAl10Fe5Ni5, CuZn31Si1, CuPb24Sn2, CuSn8Bi10, SnSb8Cu4, SnSb12Cu6Pb.

Die Gleitschicht 9 kann beispielsweise aus einer Kupfer-Blei Legierung, beispielsweise CuPb22Sn2,5, oder einer Kupfer-Zinn Legierung, beispielsweise CuSn5Zn, oder einer Aluminiumbasislegierung, beispielsweise AlSn20Cu, AlSn25Cul,5Mn0,6, oder aus einem Gleitlack, beispielsweise auf Polyamidimid-Basis mit MoS₂ und/oder Grafit, bestehen.

Die Verschleißschicht 5 kann beispielsweise aus Zinn, Blei, Bismut oder einer Bismut-Legierung, oder einem Gleitlack, beispielsweise auf Polyamidimid-Basis mit MoS2 und/oder Grafit, bestehen.

Die Diffusionssperrschicht und/oder die Bindeschicht kann z.B. aus Al, Mn, Ni, Fe, Cr, Co, Cu, Ag, Mo, Pd sowie NiSn- bzw. CuSn-Legierungen bestehen.

Der Vollständigkeit halber sei angemerkt, dass die einzelnen Schichten zumindest quantitativ, insbesondere auch qualitativ, unterschiedlich zusammengesetzt sind,

In axialem Verlauf jeweils neben jeweils einer Gleitlagerbüchse 4 kann eine Anlaufscheibe 11 zwischen den Gleitlagerbüchsen 4 bzw. dem Zahnrad 2 und dem Zahnradträger 6 vorgesehen sein.

Aus Fig. 1 ist weiter eine bevorzugte Ausführungsvariante der Schmiermittelversorgung der Laufflächen der Gleitlagerbüchsen 4 ersichtlich. Dazu kann über eine Bohrung 12 bzw. eine kanalförmige Ausnehmung in der Achse 5, von einem Schmiermitteleinlass 13, der mit einem nicht dargestellten Schmiermittelreservoir in Verbindung steht, Schmiermittel, insbesondere Schmieröl, in Bereiche 14 der Laufflächen der Gleitlagerbüchsen 4 zugeführt werden, von denen sich dann das Schmiermittel über zumindest annähernd die gesamte Lauffläche verteilt. Die Bohrung 13 bzw. die Ausnehmung weist bevorzugt mehrere Abschnitte auf, die insbesondere entweder einen radial nach außen weisenden oder einen axialen Verlauf aufweisen.

Wie aus Fig. 1 ersichtlich weist die Bohrung 12 bzw. die Ausnehmung zumindest eine Abzweigung auf, um eine Verteilung des Schmiermittels zu sämtlichen Lagerstellen zu erreichen, sodass also jede der beiden Gleitlagerbüchsen 4 über zumindest eine eigene Schmiermittelzufuhr verfügt. Gegebenenfalls können über den Umfang der Gleitlagerbüchsen 4 verteilt mehrere Schmiermittelaustritte zur Lagerstelle angeordnet sein, beispielsweise zwei oder drei oder vier, etc.

Die Schmiermittelzuführung kann ausschließlich über die Achse 5 erfolgen.

Zur besseren Verteilung des Schmiermittels über zumindest annähernd die gesamten Laufflächen ist der Zwischenraum 7 bevorzugt über zumindest eine Verbindungsleitung 15 mit der Umgebungsatmosphäre verbunden. Bevorzugt verläuft die Verbindungsleitung 15 in der Achse 5, wie dies aus Fig. 1 ersichtlich ist.

Für die Abfuhr des Schmiermittels aus den Lagerbereichen können eigene Abfuhr-leitungen (nicht dargestellt) vorgesehen sein. Zumindest ein Teil des Schmiermittels kann aber auch über die Verbindungsleitung 15 in der Achse 5 abgeführt werden.

Es sei erwähnt, dass anstelle von zwei Gleitlagerbüchsen 4 auch nur eine oder mehr als zwei Gleitlagerbüchse(n) 4 eingesetzt werden kann/können, insbesondere in Hinblick auf zu Windkraftanlagen unterschiedliche Verwendungen der Gleitlagerbüchse 4.

Zur Herstellung der Gleitlagerbüchse 4 wird eine ebene (d.h. flache) Stützmetallschicht 8 bzw. ein entsprechender ebener Stützmetallschichtrohling bereitgestellt. Auf diese ebene Stützmetallschicht 8 wird zur Herstellung eines ebenen Verbundwerkstoffes die Gleitschicht 9 angeordnet und mit der Stützmetallschicht 8 verbunden, sofern keine Zwischenschichten angeordnet werden. Falls Zwischenschichten verwendet werden, werden sie entsprechend der richtigen Reihenfolge auf der ebenen Stützmetallschicht 8 nacheinander angeordnet.

Die Verbindung der Schicht(en), insbesondere der Gleitschicht 9) mit der Lagermetallschicht 8 kann insbesondere durch Walzen erfolgen, wozu entsprechende Streifen aus dem Werkstoff für die weitere(n) Schicht(en) verwendet werden. Es sind aber auch andere Abscheideverfahren möglich, beispielsweise die galvanische Abscheidung oder die Abscheidung nach einem PVD- oder CVD-Verfahren.

Nach der Herstellung dieses ebenen Verbundwerkstoffes wird dieser in einem Walzstuhl in die Form der Gleitlagerbüchse 4 derart eingerollt, dass in der Gleitlagerbüchse die Stützmetallschicht 8 radial unterhalb der Gleitschicht 9 angeordnet wird und die Gleitschicht 9 die radial äußere Schicht zur Ausbildung der Lauffläche bildet.

Die Gleitlagerbüchse 4 weist eine Schweißnaht 16 auf. Nach dem Einrollen ist die Gleitlagerbüchse 4 im Bereich der axialen Stirnflächen noch offen ausgeführt. Um diesen beiden Stirnflächen miteinander zu verbinden werden diese mit oder ohne Zusatzstoff miteinander verschweißt. Dabei wird vorzugsweise vor dem Schweißen die Gleitschicht 9 über die gesamte Dicke in radialer Richtung und gegebenenfalls ein Teil der Stützmetallschicht 8 zur Ausbildung einer Nut entfernt. In dieser Nut erfolgt dann das Zusammenschweißen, wobei in diesem Fall nur die Stützmetallschicht 8 geschweißt wird.

Es ist vorgesehen, dass neben der Schweißnaht 16 zumindest eine in der Axialrichtung verlaufende Ölnut 17 ausgebildet ist bzw. wird. Die Ölnut 17 ist in einem Abstand zur Schweißnaht 16 angeordnet, der zwischen 0,5 % und 10 % des äußeren Umfanges der Lauffläche der Gleitschicht 9 (in der Axialrichtung betrachtet) beträgt.

Weiter ist bevorzugt, wenn die Ölnut 17 vor und in einem Abstand zu axialen Stirnflächen 18 der Gleitlagerbüchse 4 enden, sich diese also in der Axialrichtung nicht durchgehend über die gesamte Lauffläche erstrecken. Der Abstand der Ölnut von den axialen Stirnflächen 18 kann ausgewählt sein aus einem Bereich von 2 % und 20 % der axialen Gesamtlänge der Gleitlagerbüchse 4.

Die Schmiermittelzuführungsleitung, also insbesondere deren radialen Abschnitte, münden in dieser Ölnut 17, wozu in der Stützmetallschicht 8 und gegebenenfalls in der Gleitschicht 9 eine entsprechende Bohrung 19 ausgebildet ist, durch die das Schmiermittel zugeführt wird.

Die Ausführungsbeispiele zeigen bzw. beschreiben mögliche Ausführungsvarianten, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus der Gleitlagerbüchse 4 bzw. des Windkraftanlagengetriebes 1 diese nicht zwingenderweise maßstäblich dargestellt sind.

Der Ordnung halber sei abschließend darauf hingewiesen, dass zum besseren Verständnis des Aufbaus der Gleitlagerbüchse 4 bzw. des Windkraftanlagengetriebes 1 diese nicht zwingenderweise maßstäblich dargestellt sind.

### Bezugszeichenaufstellung

- 1: Windkraftanlagengetriebe
- 2: Zahnrad
- 3: Außenstirnverzahnung
- 4: Gleitlagerbüchse
- 5: Achse
- 6: Zahnradträger
- 7: Zwischenraum
- 8: Stützmetallschicht
- 9: Gleitschicht
- 10: Lagermetallschicht
- 11: Anlaufscheibe
- 12: Bohrung
- 13: Schmiermitteleinlass
- 14: Bereich
- 15: Verbindungsleitung
- 16: Schweißnaht
- 17: Ölnut
- 18: Stirnfläche
- 19: Bohrung

## Patentansprüche

1. Verfahren zur Herstellung einer Gleitlagerbüchse (4) nach dem eine ebene Stützmetallschicht (8) bereitgestellt wird, auf dieser Stützmetallschicht (8) zur Herstellung eines ebenen Verbundwerkstoffes eine Gleitschicht (9) angeordnet wird, und danach der ebene Verbundwerkstoff in die Form der Gleitlagerbüchse (4) eingerollt wird, wobei der ebene Verbundwerkstoff derart eingerollt wird, dass in der Gleitlagerbüchse (4) die Stützmetallschicht (8) radial unterhalb der Gleitschicht (9) angeordnet wird, **dadurch gekennzeichnet, dass** zur Verbindung der nach dem Einrollen offenen Enden die beiden aneinanderstoßenden Stirnflächen in der Axialrichtung unter Ausbildung einer in der Axialrichtung verlaufenden Schweißnaht (16) miteinander verschweißt werden, dass weiter eine in der Axialrichtung verlaufende Ölnut (17) in einem Abstand zur Schweißnaht (16) ausgebildet wird, wobei der Abstand zwischen 0,5 % und 10 % des äußeren Umfanges der Lauffläche der Gleitschicht (9) - in der Axialrichtung betrachtet - beträgt, wobei in die Ölnut (17) eine Schmiermittelzuführungsleitung mündet, wozu in der Stützmetallschicht (8) und gegebenenfalls in der Gleitschicht (9) eine entsprechende Bohrung (19) ausgebildet wird.

2. Gerollte Gleitlagerbüchse (4) aus einem Verbundwerkstoff umfassend eine Stützmetallschicht (8) und eine Gleitschicht (9), wobei die Stützmetallschicht (8) in radialer Richtung unterhalb der Gleitschicht (9) angeordnet ist, **dadurch gekennzeichnet, dass** die die beiden aneinanderstoßenden Stirnflächen der nach dem Einrollen offenen Enden mit einer in der Axialrichtung verlaufenden Schweißnaht (16) verbunden sind, dass eine in der Axialrichtung verlaufende Ölnut (17) in einem Abstand zur Schweißnaht (16) angeordnet ist, wobei der Abstand zur Schweißnaht (16) zwischen 0,5 % und 10 % des äußeren Umfanges der Lauffläche der Gleitschicht (9) - in der Axialrichtung betrachtet - beträgt, wobei in die Ölnut (17) eine Schmiermittelzuführungsleitung mündet, wozu in der Stützmetallschicht (8) und gegebenenfalls in der Gleitschicht (9) eine entsprechende Bohrung (19) ausgebildet ist.

3. Achse (5), insbesondere Planetenradzapfen für ein Windkraftanlagengetriebe, mit einer Gleitlagerbüchse (4), **dadurch gekennzeichnet, dass** die Gleitlagerbüchse (4) nach Anspruch 2 ausgebildet ist.

4. Achse (5) nach Anspruch 3, **dadurch gekennzeichnet, dass** die Gleitlagerbüchse (4) auf die Achse (5) aufgeschrumpft ist.

5. Achse (5) nach Anspruch 3 oder 4, **dadurch gekennzeichnet, dass** in der Achse (5) eine Schmiermittelzuführungsleitung ausgebildet ist, und dass in der Stützmetallschicht (8) der Gleitlagerbüchse (4) eine Bohrung (19) ausgebildet ist, die in die in der Axialrichtung verlaufende Ölnut (17) in der Gleitschicht (9) mündet.

6. Windkraftanlagengetriebe (1) mit zumindest einem Zahnrad (2), das auf einer Achse (5) gelagert ist, wobei zwischen dem Zahnrad (2) und der Achse (5) eine Lagerstelle mit einer Gleitlagerbüchse (4) angeordnet ist, **dadurch gekennzeichnete, dass** die Achse (5) nach einem der Ansprüche 3 bis 5 ausgebildet ist und die Gleitlagerbüchse (4) nach Anspruch 2 ausgebildet ist.

## Claims

1. A method for producing a sliding bearing bush (4) according to which a flat supporting metal layer (8) is provided, a sliding layer (9) is arranged on this supporting metal layer (8) to produce a flat composite material, and the flat composite material is then rolled into the shape of the sliding bearing bush (4), wherein the flat composite material is rolled in such a way that the supporting metal layer (8) in the sliding bearing bush (4) is arranged radially underneath the sliding layer (9), **characterized in that** for connecting the ends which are open after rolling, the two abutting end faces are welded to one another in the axial direction forming a weld seam (16) running in the axial direction, that, furthermore, an oil groove (17) running in the axial direction is formed at a distance from the weld seam (16), wherein the distance amounts to between 0.5% and 10% of the outer circumference of the running surface of the sliding layer (9) - as viewed in the axial direction -, wherein a lubricant supply line opens into the oil groove (17), for which purpose a corresponding bore (19) is formed in the supporting metal layer (8) and optionally in the sliding layer (9).

2. A rolled sliding bearing bush (4) made from a composite material comprising a supporting metal layer (8) and a sliding layer (9), wherein the supporting metal layer (8) is arranged below the sliding layer (9) in the radial direction, **characterized in that** the two abutting end faces of the ends which are open after rolling are joined by a weld seam (16) running in the axial direction, that an oil groove (17) extending in the axial direction is arranged at a distance from the weld seam (16), wherein the distance from the weld seam (16) amounts to between 0.5% and 10% of the outer circumference of the running surface of the sliding layer (9) - as viewed in the axial direction -, wherein a lubricant supply line opens into the oil groove (17), for which purpose a corresponding bore (19) is formed in the supporting metal layer (8) and, optionally, in the sliding layer (9).

3. A shaft (5), in particular a planetary gear shaft for a wind turbine gearbox, having a sliding bearing bush (4), **characterized in that** the sliding bearing bush (4) is formed according to claim 2.

4. The shaft (5) according to claim 3, **characterized in that** the sliding bearing bush (4) is shrunk onto the shaft (5).

5. The shaft (5) according to claim 3 or 4, **characterized in that** a lubricant supply line is provided in the shaft (5), and that a bore (19) is provided in the supporting metal layer (8) of the sliding bearing bush (4) which opens into an oil groove (17) in the sliding layer (9) extending in the axial direction.

6. A wind turbine gearbox (1) having at least one gear (2) which is mounted on a shaft (5), wherein a bearing having a sliding bearing bush (4) is arranged between the gear (2) and the shaft (5), **characterized in that** the shaft (5) is formed according to one of claims 3 to 5 and the sliding bearing bush (4) is formed according to claim 2.

## Revendications

1. Procédé de fabrication d'un coussinet lisse (4) selon lequel une couche métallique d'appui (8) plane est réalisée, une couche de glissement (9) est disposée sur cette couche métallique d'appui (8) pour la réalisation d'un matériau composite plan, et ensuite le matériau composite plan est enroulé pour adopter la forme du coussinet lisse (4), le matériau composite plan étant enroulé de telle sorte que, dans le coussinet lisse (4), la couche métallique d'appui (8) est disposée de façon radiale au-dessous de la couche de glissement (9), **caractérisé en ce que**, pour le raccordement des extrémités ouvertes après l'enroulement, les deux surfaces frontales en butée l'une contre l'autre sont assemblées l'une à l'autre par soudage dans la direction axiale avec formation d'un cordon de soudure (16) s'étendant dans la direction axiale, **en ce qu'**en outre une rainure de lubrification (17) s'étendant dans la direction axiale est constituée à distance du cordon de soudure (16), la distance étant comprise entre 0,5 % et 10 % de la circonférence extérieure de la surface de roulement de la couche de glissement (9) - vu dans la direction axiale - une conduite d'amenée de lubrifiant débouchant dans la rainure de lubrification (17), un alésage (19) correspondant étant constitué pour cela dans la couche métallique d'appui (8) et éventuellement dans la couche de glissement (9).

2. Coussinet lisse (4) enroulé en matériau composite, comprenant une couche métallique d'appui (8) et une couche de glissement (9), la couche métallique d'appui (8) étant disposée dans la direction radiale au-dessous de la couche de glissement (9), **caractérisé en ce que** les deux surfaces frontales en butée l'une contre l'autre des extrémités ouvertes après l'enroulement sont raccordées avec un cordon de soudure (16) s'étendant dans la direction axiale, **en ce qu'**une rainure de lubrification (17) s'étendant dans la direction axiale est disposée à distance du cordon de soudure (16), la distance au cordon de soudure (16) étant comprise entre 0,5 % et 10 % de la circonférence extérieure de la surface de roulement de la couche de glissement (9) - vu dans la direction axiale - une conduite d'amenée de lubrifiant débouchant dans la rainure de lubrification (17), un alésage (19) correspondant étant constitué pour cela dans la couche métallique d'appui (8) et éventuellement dans la couche de glissement (9).

3. Axe (5), en particulier tourillon de roue satellite pour un mécanisme d'éolienne, avec un coussinet lisse (4), **caractérisé en ce que** le coussinet lisse (4) est constitué selon la revendication 2.

4. Axe (5) selon la revendication 3, **caractérisé en ce que** le coussinet lisse (4) est fretté sur l'axe (5).

5. Axe (5) selon la revendication 3 ou 4, **caractérisé en ce que**, dans l'axe (5), il est constitué une conduite d'amenée de lubrifiant, et **en ce que**, dans la couche métallique d'appui (8) du coussinet lisse (4), il est constitué un alésage (19) qui débouche dans la rainure d'huile (17) s'étendant dans la direction axiale dans la couche de glissement (9).

6. Mécanisme d'éolienne (1) avec au moins une roue dentée (2) qui est supportée sur un axe (5), un point de support avec un coussinet lisse (4) étant disposé entre la roue dentée (2) et l'axe (5), **caractérisé en ce que** l'axe (5) est constitué selon l'une des revendications 3 à 5, et le coussinet lisse (4) est constitué selon la revendication 2.
